# EUROPEAN PATENT SPECIFICATION

(11) **EP 2 813 721 B1**
(45) Date of publication and mention of the grant of the patent: **21.11.2018**
(21) Application number: 13746656.1
(22) Date of filing: 06.02.2013
(51) Int. Cl.: F16C 33/78, B60B 35/02, B60B 35/18, F16C 33/66, F16C 33/80, F16J 15/32

(54) **WHEEL BEARING DEVICE**
RADLAGERVORRICHTUNG
DISPOSITIF DE ROULEMENT DE MOYEU

(30) Priority: 07.02.2012 JP 2012024126
(43) Date of publication of application: 17.12.2014
(73) Proprietor: NTN Corporation, Osaka-shi, Osaka 550-0003 (JP)
(72) Inventor: SHIBATA, Yasushi, Iwata-shi, Shizuoka 4388510 (JP)
(74) Representative: Cohausz & Florack
(86) International application number: PCT/JP2013/052767
(87) International publication number: WO 2013/118782

(56) References cited:
- JP-A- 2004 353 710
- JP-A- 2006 083 878
- JP-A- 2010 084 142
- JP-A- 2010 159 791
- JP-A- 2011 069 422
- JP-A- 2011 185 342
- US-A1- 2009 136 170
- Drew Troyer: "Understanding Absolute and Kinematic Viscosity", Machinery Lubrication - Noria Publication , March 2002 (2002-03), XP002753137, Retrieved from the Internet: URL:http://www.machinerylubrication.com/Re ad/294/absolute-kinematic-viscosity [retrieved on 2016-01-19]

## Description

### Field of the Invention

The present invention relates to a wheel bearing apparatus for a vehicle for rotationally supporting a wheel of vehicle relative to a suspension apparatus.

### Description of Background Art

In general, the wheel bearing apparatus can rotationally support a hub wheel for mounting a wheel via double row rolling bearings and are classified for a driving wheel and a driven wheel. For structural reasons, the wheel bearing apparatus of an inner ring rotation type is used for the driving wheel and both the inner ring rotation type and outer ring rotation type are used for the driven wheel. In general the wheel bearing apparatus is classified to a so-called first generation type in which the wheel bearing comprising double row angular-contact ball bearings is fitted between the knuckle and the hub wheel, a second generation type in which a body mounting flange or a wheel mounting flange is integrally formed on the outer circumference of an outer member, a third generation type in which one of inner raceway surfaces is directly formed on the outer circumference of a hub wheel, and a fourth generation type in which inner raceway surfaces are directly formed on the outer circumferences respectively of the hub wheel and the outer joint member of a constant velocity universal joint.

The wheel bearing apparatus is provided with seals for preventing leakage of grease contained within the bearing apparatus and entering of rain water or dusts from outside of the bearing apparatus. Recently, the bearing apparatus has been desired to have long durability along a tendency of maintenance-free of an automobile. Under the circumstances it has been proved that many causes are based on troubles in seals of bearing apparatus due to entering of rain water or dusts into the bearing rather than peeling or breakage of structural elements of bearings. Accordingly it is very important to improve the sealability of bearing apparatus in order to extend its life.

In recently, there has been required to improve fuel consumption in view of energy saving and pollution of the global environment. Accordingly it is important to reduce the rotational torque of the wheel bearing apparatus. In the wheel bearing apparatus, since the sliding resistance of the sealing apparatus is predominant over the rolling resistance of the rolling elements (balls or tapered rollers), it is possible to reduce the rotational torque of the wheel bearing apparatus by suppressing the sliding resistance of the sealing apparatus.

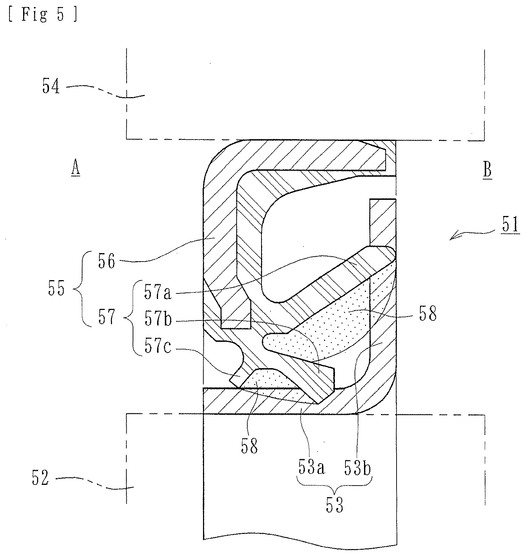

There has been proposed a variety of sealing apparatus which can improve the sealability and reduce the rotational torque, and one example of which is shown in Fig. 5. This inner-side sealing apparatus 51 comprises a slinger 53 adapted to be fitted onto an inner member 52 and a seal main body 55 adapted to be fitted into an outer member 54. The slinger 53 comprises a cylindrical fitting portion 53a adapted to be fitted onto the inner member 52 and a standing portion 53b extending from the fitting portion 53a radially outward. In addition, the seal main body 55 comprises a core metal 56 adapted to be fitted into the outer member 54 and a sealing member 57 secured on the core metal 56 and including a main lip 57b, a sub-lip 57c and side lip 57a which closely contact with a slinger 53.

Sealing lubricant (i.e. sealing grease) 58 is contained in a sealed manner in spaces between the side lip 57a, the main lip 57b and the slinger as well as between the main lip 57b, the sub-lip 57c and the slinger. When the seal main body 55 is assembled to the slinger 53, the tip end of the main lip 57b is directed to the outside "B" of the bearing and contacts with the surface of the fitting portion 53a of the slinger 53 and the tip end of the sub-lip 57c is directed toward the inside "A" of the bearing and contacts with the surface of the fitting portion 53a of the slinger 53. This makes it possible to prevent bearing lubricant (i.e. bearing grease) contained in the bearing from being leaked to the outside "B" of the bearing. On the other hand, the tip end of the side lip 57a is directed radially outward and contacts with the surface of the standing portion 53b of the slinger 53. This makes it possible to prevent foreign material such as muddy water from being entered from the outside "B" to the inside "A" of the bearing.

The sealing grease 58 is contained in spaces between the side lip 57a, the main lip 57b and the slinger 53 as well as between the main lip 57b, the sub-lip 57c and the slinger 53. The sealing grease 58 has kinematic viscosity of base oil of 20∼65 mm2/s, preferably 20∼25 mm2/s at 40°C and worked penetration of 220∼280, preferably 240∼260. In this case, if the kinematic viscosity of base oil is less than 20 mm2/s and the worked penetration exceeds 280, the flowability of the sealing grease 58 will be high and thus the sealing grease 58 would be leaked from the sliding surfaces of the slinger 53. On the contrary, if the kinematic viscosity of base oil exceeds 65 mm2/s and the worked penetration is less than 220, the apparent viscosity of the sealing grease 58 will be high and thus the frictional torque of the sealing lips 58 would be undesirably increased whereas the worked penetration exceeds 280, the softness of the sealing grease 58 will be high and thus the sealing grease 58 would be leaked from the sliding surfaces of the slinger 53.

In the sealing apparatus 51, since the main lip 57b, sub-lip 57c and side lip 57a closely contact with the slinger 53 fitted onto the inner member 52, it is possible to prevent leakage of the bearing grease from the inside "A" of the bearing and entering of foreign matter such as muddy water to the inside "A" of the bearing from the outside "B". In addition, since the sealing grease 58 is contained in a sealing manner in spaces between the side lip 57a and the main lip 57b as well as between the main lip 57b and the sub-lip 57c and it has the kinematic viscosity of base oil of 20∼65 mm2/s at 40°C and the worked penetration of 220∼280, it is possible to reduce the frictional torque and accordingly the rotational torque of the sealing apparatus 51 (see Patent Document No. 1 below).

### Document of Prior Art

### Patent Document

Patent Document 1: JP 2008-25668 A. Moreover, document JP 2006-083878 A discloses a wheel bearing apparatus for a vehicle with sealing grease and bearing grease of the same type according to the preamble of claim 1.

### Disclosure of the Invention

### Problems to be solved by the Invention

However, the important matter is to prevent the reduction of endurance life of the bearing due to lubrication defects of the bearing grease sealed in the bearing. Although the sealing grease 58 sealed in the sealing apparatus 51 may be different from the bearing grease sealed in the bearing, there are sometimes caused problems of quality degradation of both the bearing grease and the sealing grease due to mixture of them. Thus, it is important to select best characteristics and combinations of both the bearing grease and the sealing grease which do not cause problems described above.

It is therefore an object of the present invention to provide a wheel bearing apparatus which can reduce the frictional torque of the sealing lips and thus reduce the rotational torque of the sealing apparatus with selecting best characteristics and combinations of both the bearing grease and the sealing grease which can prevent mixture of them by suppressing their flowability.

### Means for solving the Problems

For achieving the object of the present invention, there is provided, according to the present invention of claim 1, a wheel bearing apparatus for a vehicle comprising an outer member formed on its inner circumference with double row outer raceway surfaces; an inner member including a hub wheel and at least one inner ring, the hub wheel being integrally formed on its one end with a wheel mounting flange and with a cylindrical portion axially extending from the wheel mounting flange, the inner ring being press-fitted onto the cylindrical portion of the hub wheel, and double row inner raceway surfaces opposing respectively to the double row outer raceway surfaces and formed on the outer circumferences of the hub wheel and the inner ring; double row rolling elements freely rollably contained between the inner raceway surfaces of the inner member and the outer raceway surfaces of the outer member; and seals mounted within annular openings formed between the outer member and the inner member characterized in that at least one seal of the seals comprises a core metal press-formed of steel sheet including a cylindrical fitting portion adapted to be press-fitted into the inner circumference of the end of the outer member via a predetermined interference and a radial portion extending radially inward from the end of the fitting portion, and further comprising a sealing member of synthetic rubber formed with a plurality of sealing lips and integrally adhered to the fitting portion of the core metal by vulcanizing adhesion; that bearing grease is contained within the bearing in a sealed manner and sealing grease is applied to the sliding portions of the sealing lips; that both the bearing grease and the sealing grease use same thickener and the worked penetration of the grease is 350 or less; and that the kinematic viscosity of base oil of the sealing grease at 40°C is set to 70% or less of that of the bearing grease at 40°C.

According to the wheel bearing apparatus for a vehicle of claim 1, since it is characterized in that at least one seal of the seals comprising a core metal press-formed of steel sheet including a cylindrical fitting portion adapted to be press-fitted into the inner circumference of the end of the outer member via a predetermined interference and a radial portion extending radially inward from the end of the fitting portion, and further comprising a sealing member of synthetic rubber formed with a plurality of sealing lips and integrally adhered to the fitting portion of the core metal by vulcanizing adhesion; that bearing grease is contained within the bearing in a sealed manner and sealing grease is applied to the sliding portions of the sealing lips; that both the bearing grease and the sealing grease use same thickener and the worked penetration of the grease is 350 or less; and that the kinematic viscosity of base oil of the sealing grease at 40°C is set to 70% or less of that of the bearing grease at 40°C, it is possible to provide a wheel bearing apparatus which can reduce the frictional torque of the sealing lips and thus reduce the rotational torque of the sealing apparatus with selecting best characteristics and combinations of both the bearing grease and the sealing grease which can prevent mixture of them by suppressing their flowability.

It is preferable as defined in claim 2 that the bearing grease comprises urea-base thickener and the kinematic viscosity of base oil of the bearing grease at 40°C is set to a range of 30∼170 mm2/s.

It is preferable as defined in claim 3 that the pour point of base oil of the sealing grease is adjusted to a range of -65∼-12.5°C. This makes it possible to suppress increase of starting torque of seal due to high viscosity or solidification of base oil at a temperature below the freezing point.

It is also preferable as defined in claim 4 that the pour point of base oil is adjusted by mixing mineral oil and synthetic oil and as defined in claim 5 that the pour point of base oil is adjusted by adding pour point depressant to the base oil.

It is preferable as defined in claim 6 that the saturated moisture of the sealing grease is set to a range of 30∼60% by weight. This makes it possible to obtain high oil film formation even when the sealing grease is moisturized and thus to reduce the frictional torque of the sealing lips for a long term without causing sliding degradation.

It is preferable as defined in claim 7 that mating surfaces of members with which the sealing lips engage are roughened to a maximum height Rz 5∼20 (JIS B 0601-2001). This makes it possible to increase grease holding power due to increase of surface area and thus to reduce the rotational torque due to improvement of lip lubrication and reduction of lip sliding resistance.

It is also preferable as defined in claim 8 that mating surfaces of members with which the sealing lips engage are formed with innumerable dimples by shot blast treatment and roughened to a range of maximum height Rz 1∼9 (JIS B 0601-2001). This makes it possible to increase grease holding power due to increase of surface area by dimples and thus to improve the sealability and durability of the seal for a long term due to suppression of wear of sealing lips and heat generation of lip sliding portions.

It is preferable as defined in claim 9 that the sealing member is adhered to the core metal so that it covers the external surface of the core metal from its radial portion to fitting portion and forms an annular projection, and that the annular projection has an outer diameter gradually increasing toward the outer-side end of the outer member so as to have a tapered outer surface of a predetermined inclined angle and a predetermined projected height slightly larger than the outer diameter of the fitting portion of the core metal. This makes it possible to improve effect of interference with reducing press-fitting resistance and thus to protect the inside of the bearing with improving the sealability of the fitting portion and additionally to improve the reliability of the bearing with preventing damages of the sealing member during press-fitting thereof. It is also preferable as defined in claim 10 that an inner-side tip end of the fitting portion of the core metal is thinned, the inner-side being a side which is positioned inside of a vehicle body when the wheel bearing apparatus is mounted on the vehicle body, and wherein the sealing member is adhered to the core metal so that it covers the external surface of the core metal from its radial portion to fitting portion. This also makes it possible to improve effect of interference and thus to protect the inside of the bearing with improving the sealability of the fitting portion.

### Effects of the Invention

According to the wheel bearing apparatus for a vehicle of the present invention, since it comprises an outer member formed on its inner circumference with double row outer raceway surfaces; an inner member including a hub wheel and at least one inner ring, the hub wheel being integrally formed on its one end with a wheel mounting flange and with a cylindrical portion axially extending from the wheel mounting flange, the inner ring being press-fitted onto the cylindrical portion of the hub wheel, and double row inner raceway surfaces opposing respectively to the double row outer raceway surfaces and formed on the outer circumferences of the hub wheel and the inner ring; double row rolling elements freely rollably contained between the inner raceway surfaces of the inner member and the outer raceway surfaces of the outer member; and seals mounted within annular openings formed between the outer member and the inner member and is characterized in that at least one seal of the seals comprises a core metal press-formed of steel sheet including a cylindrical fitting portion adapted to be press-fitted into the inner circumference of the end of the outer member via a predetermined interference and a radial portion extending radially inward from the end of the fitting portion, and further comprises a sealing member of synthetic rubber formed with a plurality of sealing lips and integrally adhered to the fitting portion of the core metal by vulcanizing adhesion; that bearing grease is contained within the bearing in a sealed manner and sealing grease is applied to the sliding portions of the sealing lips; that both the bearing grease and the sealing grease use same thickener and the worked penetration of the grease is 350 or less; and that the kinematic viscosity of base oil of the sealing grease at 40°C is set to 70% or less of that of the bearing grease at 40°C, it is possible to provide a wheel bearing apparatus which can reduce the frictional torque of the sealing lips and thus reduce the rotational torque of the sealing apparatus with selecting best characteristics and combinations of both the bearing grease and the sealing grease which can prevent mixture of them by suppressing their flowability.

### Brief description of the Drawings

[Fig. 1] A longitudinal section view showing one preferred embodiment of the wheel bearing apparatus for a vehicle of the present invention;
[Fig. 2] A partially enlarged view showing an outer-side seal of Fig. 1;
[Fig. 3] A partially enlarged view showing an inner-side seal of Fig.1;
[Fig. 4] Fig. 4(a): an explanatory partially enlarged sectional view showing a slinger of Fig.3, Fig. 4(b): an explanatory partially enlarged view taken from an arrow IVb in Fig. 4(a), and Fig. 4(c): an explanatory partially enlarged view taken from an arrow IVc in Fig. 4(a); and
[Fig. 5] A partially enlarged view showing an inner-side seal of the wheel bearing apparatus for a vehicle of the prior art.

### Preferable mode for carrying out the Invention

One preferable mode for carrying out the present invention is a wheel bearing apparatus for a vehicle comprising an outer member formed on its outer circumference with a body mounting flange to be mounted on a body of a vehicle and on its inner circumference with double row outer raceway surfaces; an inner member including a hub wheel and at least one inner ring, the hub wheel being integrally formed on its one end with a wheel mounting flange and with a cylindrical portion axially extending from the wheel mounting flange, the inner ring being press-fitted onto the cylindrical portion of the hub wheel, and double row inner raceway surfaces opposing respectively to the double row outer raceway surfaces and formed on the outer circumferences of the hub wheel and the inner ring; double row rolling elements freely rollably contained between the inner raceway surfaces of the inner member and the outer raceway surfaces of the outer member; and seals mounted within annular openings formed between the outer member and the inner member characterized in that at least one seal of the seals comprises an annular sealing plate and a slinger each having a substantially L-shaped cross-section and oppositely arranged toward each other, the sealing plate comprising a core metal adapted to be press-fitted into the inner circumference of the end of the outer member and a sealing member integrally adhered to the core metal by vulcanizing adhesion; that bearing grease is contained within the bearing in a sealed manner and sealing grease is applied to the sliding portions of the sealing lips; that both the bearing grease and the sealing grease use same thickener and the worked penetration of 350 or less; and that the kinematic viscosity of base oil of the sealing grease at 40°C is set to 70% or less of that of the bearing grease at 40°C.

### Embodiment

A preferred embodiment of the present invention will be hereinafter described with reference to the drawings.

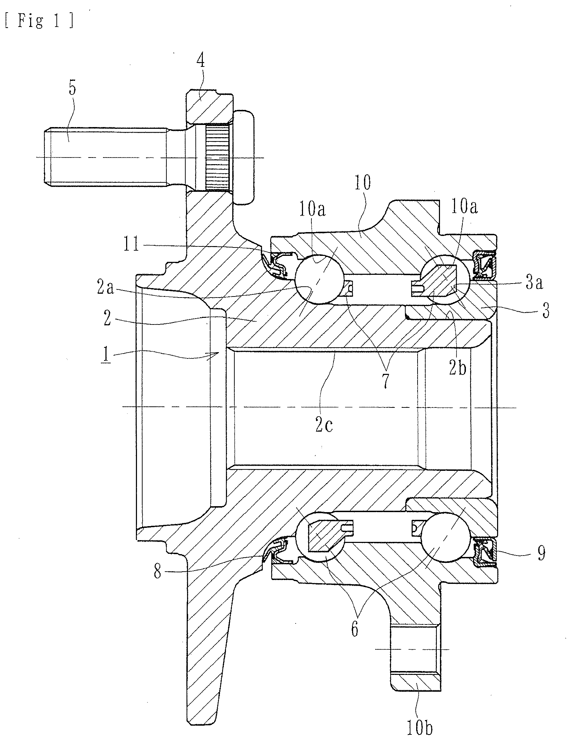

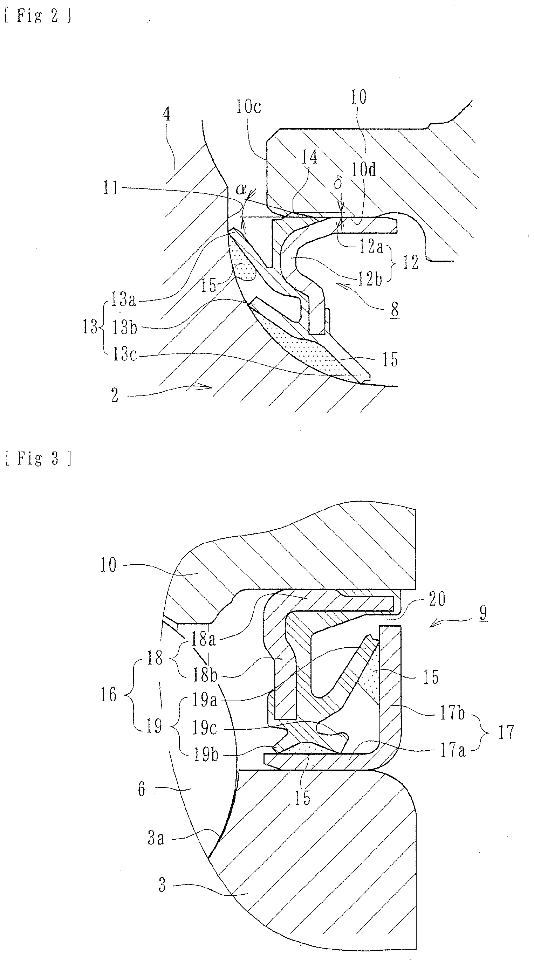

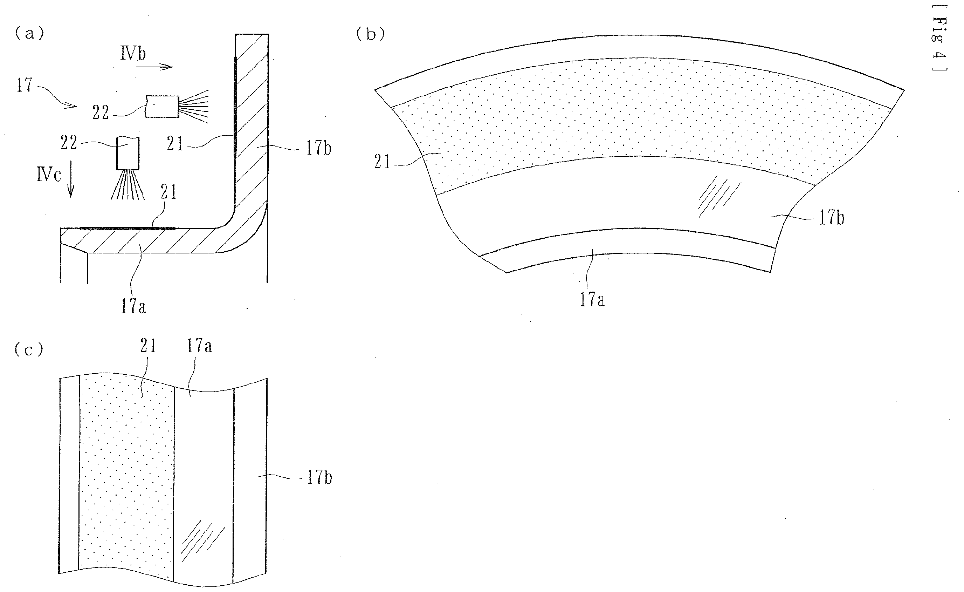

Fig. 1 is a longitudinal section view showing one preferred embodiment of the wheel bearing apparatus for a vehicle of the present invention; Fig. 2 is a partially enlarged view showing an outer-side seal of Fig. 1; Fig. 3 is a partially enlarged view showing an inner-side seal of Fig.1; and Fig. 4(a) is an explanatory partially enlarged sectional view showing a slinger of Fig.3, Fig. 4(b) is an explanatory partially enlarged view taken from an arrow IVb in Fig. 4(a), and Fig.4(c) is an explanatory partially enlarged view taken from an arrow IVc in Fig. 4(a). In descriptions in this specification, a term "outer-side" defines a side which is positioned outside of a vehicle body (left-hand side in drawings) and a term "inner-side" defines a side which is positioned inside of a vehicle body (right-hand side in drawings) when the bearing apparatus is mounted on a vehicle body.

The illustrated wheel bearing apparatus of the present invention is a so-called "third generation" type for a driving wheel and comprises an inner member 1, an outer member 10, and double row rolling elements (balls) 6, 6 contained between the inner and outer members 1, 10. The inner member 1 comprises hub wheel 2 and an inner ring 3 press-fitted onto the hub wheel 2.

The hub wheel 2 is integrally formed, on its outer-side end, with wheel mounting flange 4 for mounting a wheel (not shown) and hub bolts 5 are mounted on the wheel mounting flange 4 along there at its circumferentially equidistant positions. The hub wheel 2 is integrally formed, on its outer circumference, with one (outer-side) inner raceway surface 2a and a cylindrical portion 2b axially extending from the inner raceway surface 2a. The hub wheel 2 is also formed, on its inner circumference, with a serration (or spline) 2c for torque transmission. The inner ring 3 is formed, on its outer circumference, with the other (inner-side) inner raceway surface 3a and press-fitted onto the cylindrical portion 2b of the hub wheel 2 via a predetermined interference.

The hub wheel 2 is formed of medium-high carbon steel such as S53C including carbon of 0.40∼0.80% by weight and is hardened by high frequency induction hardening as having a surface hardness of 58∼64 HRC over a region from an inner-side base portion 11 of the wheel mounting flange forming a mating surface (seal land portion) of a seal 8 (described later) to the cylindrical portion 2b through the outer-side inner raceway surface 2a. This applies sufficient mechanical strength to the hub wheel 2 against rotary bending loaded on the wheel mounting flange 4 and thus improves the strength and durability of the hub wheel 2. On the other hand, the inner ring 3 and rolling elements 6 are formed of high carbon chrome steel such as SUJ2 and dipping hardened to their cores as having hardness of 58∼64 HRC.

The outer member 10 is formed, on its outer circumference, with a body mounting flange 10b to be mounted on a body (not shown) of a vehicle and on its inner circumference, with double row outer raceway surfaces 10a, 10a opposing to the inner raceway surfaces 2a, 3a of the inner member 1. Similarly to the hub wheel 2, the outer member 10 is formed of medium-high carbon steel such as S53C including carbon of 0.40∼0.80% by weight and is hardened by high frequency induction hardening as having a surface hardness of 58∼64 HRC. The double row rolling elements 6, 6 are rollably contained in an annular space between the inner raceway surfaces 2a, 3a and the outer raceway surfaces 10a, 10a and freely rollably held therein by cages 7, 7. Seals (i.e. an inner-side seal 9 and an outer-side seal 8) are mounted in annular openings formed between the outer member 10 and inner member 1 at their both ends to close and seal the annular openings in order to prevent leakage of bearing grease contained in the bearing in a sealed manner and entering of rain water or dusts from the outside of the bearing to the inside thereof.

Although it is shown here the wheel bearing apparatus formed by a double row angular contact ball bearing using balls as rolling elements 6, the present invention is not limited to such a bearing and may be a double row tapered roller bearing using tapered rollers as rolling elements 6. In addition, although it is shown here a third generation type in which the inner raceway surface 2a is directly formed on the hub wheel 2, the present invention may be applied e.g. to the first and second generation types in which a pair of inner rings are press-fitted onto a cylindrical portion of a hub wheel.

As shown in Fig. 2, the outer-side seal 8 is formed as an integrated seal comprising a core metal 12 and a sealing member 13 integrally adhered to the core metal 12 via vulcanizing adhesion. The core metal 12 is press-formed of steel plate such as a ferritic stainless steel sheet (JIS SUS 430 etc.), an austenitic stainless steel sheet (JIS SUS304 etc.) or preserved cold rolled steel sheet as having a substantially L-shaped longitudinal section and comprises a cylindrical fitting portion 12a to be press-fitted into the inner circumference 10d of the outer member 10 via a predetermined interference and a radial portion 12b extending radially inward from the end of the fitting portion 12a. A sealing member 13 is adhered to the core metal 12 so that it covers the external surface of the core metal 12 from its radial portion 12b to fitting portion 12a and forms an annular projection 14.

The annular projection 14 has an outer diameter gradually increasing toward the outer-side end 10c of the outer member 10 so as to have a tapered outer surface of a predetermined inclined angleaand a predetermined projected heightδslightly larger than the outer diameter of the fitting portion 12a of the core metal 12 and is press-fitted into the inner circumference 10d of the outer member 10 via a predetermined interference. In this case, it is possible to prevent generation of damages in rubber of the sealing member 13 during the press-fitting by previously applying grease on the surface of the sealing member 13.

The inclined angle α of the annular projection 14 is set to a range of 5∼15° and the projected heigh δ to 0.25∼0.30 mm. Thus it is possible to provide a wheel bearing apparatus which can improve effect of interference with reducing press-fitting resistance and thus to protect the inside of the bearing with improving the sealability of the fitting portion and additionally to improve the reliability of the bearing with preventing damages of the sealing member 13 during press-fitting thereof.

In this case if the inclined angleaexceeds 15°, it is afraid that any damage would be caused in the sealing member 13 and on the contrary if the inclined angleais less than 5°, the effects of the annular projection 14 would be reduced to half. In addition, if the projected height δ exceeds 0.30 mm, resistance of press-fitting will be increased and damages of the sealing member 13 would be caused and on the contrary if the projected height δ is less than 0.25 mm, sealing effect would be reduced.

On the other hand, the sealing member 13 is formed of synthetic rubber such as NBR (acrylonitrile-butadiene rubber) and comprises a side lip 13a and a dust lip 13b which angularly extend radially outward and slidably contact with the base portion 11 of the wheel mounting flange 4 formed as having a circular arc longitudinal section, and a grease lip 13c angularly extending toward inside of the bearing. There are materials of sealing member 13 other than NBR, e.g. such as HNBR (hydrogenation acrylonitric-butadiene rubber), EPDM (ethylene propylene rubber), ACM (poly-acrylic rubber), and FKM (fluororubber) or silicone rubber which are superior in heat and chemical resistance.

In Tables 1 and 2 below, the "bearing grease" sealed within the bearing is designated by a character "A" and two kinds of the "sealing grease" applied and held in spaces between the side lip 13a and the dust lip 13b as well as between the dust lip 13b and the grease lip 13c are designated respectively by characters "B" and "C". Experiments were performed to confirm effects of torque reduction and bearing life using the bearing grease "A" having the kinematic viscosity of base oil of 30∼170 mm2/s at 40°C and the worked penetration of 270∼300, and the sealing greases "B", "C" having specifications shown in Table 1. It has been confirmed that the rotational torque can be reduced by setting the kinematic viscosity of base oil of the sealing grease "B" at 40°C to 70% or less than that of the bearing grease "A". However, in case of the sealing grease "C" using different thickener, it has confirmed that the rotational torque was reduced but the bearing life was inferior to that of a bearing of current specifications.

**[Table 1]**

| Name of grease | A | B | C |
|---|---|---|---|
| Base oil | Mineral oil | Mineral oil | Mineral oil |
| Kinematic viscosity of base oil (mm²/s) | 30∼170 | 20∼45 | ← |
| Thickener | Urea | ← | Lithium |
| Worked penetration | 270∼300 | 250∼320 | ← |

**[Table 2]**

| Bearing grease | Sealing grease | Torque | Endurance life | Remarks |
|---|---|---|---|---|
| A | A | Moderate | Moderate | Current specifications |
| A | B | Reduced | Moderate | - |
| A | C | Reduced | Inferior | - |

From these experiments it is found that it is possible to provide a seal which can reduce the frictional torque of sealing lips and thus reduce the rotational torque of the seal with keeping the bearing performance and in which the sealing grease is not mixed with the bearing grease with suppressing the flowability of the sealing grease by applying sealing grease on the sliding portions of sealing lips which includes same thickener as that of the bearing grease and has a worked penetration of 350 or less and a kinematic viscosity of base oil at 40°C of 70% or less than that of the bearing grease. If the worked penetration exceeds 350, it is afraid that the sealing grease would be scattered by centrifugal force. Thus, it is preferable to set the worked penetration to 350 or less to apply moderate self-holding power to the sealing grease. In addition, in order to reduce the rotational torque of the wheel bearing apparatus, the kinematic viscosity of base oil at 40°C is set to 70% or less than that of the bearing grease.

In addition, it is possible to suppress increase of the starting torque of the outer-side seal 8 due to high viscosity or solidification of base oil at a temperature below freezing point by using sealing grease comprising base oil formed of mixture of mineral oil and synthetic oil. Furthermore, it is possible to adjust the pour point of base oil to a predetermined temperature range (-65∼-12.5°C) by adding pour point depressant to the sealing grease. The lower the pour point of base oil, the higher the ability of the oil being remained its flowability and sealing grease having pour point of -12.5°C can be used for a severe cold area. For example, sealing grease of its base oil having a pour point of about -5°C would be solidified in Hokkaido area (Japan) and cannot be used therein. Accordingly -65°C is a pour point at which the sealing grease can be used and some troubles would be caused in severe cold area if the pour point is higher than -12.5°C.

The wheel bearing apparatus is sometimes used in environments in which rain water or muddy water would enter into the bearing and thus it has been used sealing grease of which saturated moisture is controlled by blending dispersant for dispersing water as fine particles into sealing grease. That is, it can be appreciated that formation of oil film of sealing grease cannot be prevented and thus endurance life of the bearing will be improved since in the sealing grease of its saturated moisture being controlled, water infiltrated into sealing grease can be dispersed into sealing grease as fine particles and confined in the grease of a continuous phase. The present invention is based on such a knowledge and in particularly high oil film formation can be obtained when the saturated moisture of the sealing grease is in a range of 30∼60% by weight, more preferably of 40∼50% by weight.

When water has infiltrated into sealing grease, it is afraid that formation of oil film would be spoiled in grease of which saturated moisture being less than 30% by weight and in grease of which saturated moisture exceeding 60% by weight and therefore metal-to-metal contact or generation of rust would be caused. Since the oil film can be formed when the saturated moisture is in a range of 30∼60% by weight, metal-to-metal contact will rarely occur and generation of rust will be prevented. Accordingly, it is possible to keep the lubricating performance in rolling contact portions and sliding performance of the sealing grease 15 and thus to reduce the frictional torque of sealing lips. In the present invention, the saturated moisture (% by weight) is defined as follows: saturated moisture (% by weight) = (max. moisture dispersible in grease×100) / (weight of grease + max. moisture dispersible in grease).

In the present invention, it is possible to use surface active agent as the dispersant for controlling saturated moisture in the sealing grease 15. The surface active agent can be used for dispersing water infiltrated into grease and making harmless to prevent oil film breakage and generation of rust even if water has infiltrated into bearing portions and the seal 8. The water infiltrated into sealing grease is changed to fine water particles by surface active agent and dispersed into the sealing grease. Since grease can exist as continuous phase, it is appreciated that oil film breakage is not caused. There are examples of the surface active agents based on polyalkylene glycol, carboxylic acid alkylene glycol, carboxylic acid polyalkylene glycol etc. Generation of rust at lip sliding portions can be effectively suppressed by mixing preservatives such as sulfonates, esters etc. with sealing grease 15.

As shown in an enlarged view of Fig. 3, the inner-side seal 9 is formed as a composite seal of a so-called "pack seal" comprising an annular sealing plate 16 and an annular slinger 17 each having a substantially "L"-shaped longitudinal section and oppositely arranged.

The annular sealing plate 16 comprises a core metal 18 adapted to be press-fitted into the inner circumference of the inner-side end of the outer member 10 and a sealing member 19 integrally adhered to the core metal 18 via vulcanizing adhesion. The core metal 18 is press-formed of a ferritic stainless steel sheet, an austenitic stainless steel sheet or a preserved cold rolled steel sheet as having a substantially L-shaped longitudinal section and comprises a cylindrical fitting portion 18a to be press-fitted into the outer member 10 and a radial portion 18b extending radially inward from the end of the fitting portion 18a. The inner-side tip end of the fitting portion 18a of the core metal 18 is thinned and the sealing member 19 is adhered to the core metal 18 so that it covers the external surface of the core metal 18 from its radial portion 18b to fitting portion 18a to form a so-called half metal structure.

Similarly to the core metal 18, the slinger 17 is also press-formed of a ferritic stainless steel sheet, an austenitic stainless steel sheet or a preserved cold rolled steel sheet as having a substantially L-shaped longitudinal section and comprises a cylindrical portion 17a to be press-fitted into the inner ring 3 and a standing portion 17b extending radially outward from the end of the cylindrical portion 17a. The outer circumferential edge of the standing portion 17b of the slinger 17 is arranged to be opposed to the sealing plate 16 via a slight radial gap to form a labyrinth seal 20.

The sealing member 19 is formed of synthetic rubber such as NBR and comprises a side lip 19a slide-contacting with an outer-side surface of the standing portion 17b of the slinger 17, and a grease lip 19b and a dust lip 19c formed in a forked configuration at a radially inward position of the side lip 19a and slide-contacting with the outer circumference of the cylindrical portion 17a of the slinger 17.

Sealing grease 15 is applied to a space between the side lip 19a and the dust lip 19c and a space between the dust lip 19c and the grease lip 19b. Similarly to the outer-side seal 8, the sealing grease 15 is formed of grease different from that of the bearing grease. Also in this inner-side seal 9, it is possible to reduce the frictional torque of lips and thus the rotational torque of the seal 9 by using the sealing grease 15 formed of grease different from that of the bearing grease and by setting the kinematic viscosity of base oil of the sealing grease at 40°C to 70% or less of that of the bearing grease at 40°C.

Further according to the present invention, innumerable dimples 21 are formed on the lip sliding surfaces of the slinger 17 by shot blast treatment as schematically shown in Fig. 4. The dimples 21 may be formed on the surface of the base portion 11 of the wheel mounting flange 4 with which the sealing lips of the outer-side seal 8 engage. As shown in Fig. 4(a), the shot blast is performed firstly by placing the slinger 17 on a rotary jig (not shown) and then by blasting media such as steel beads onto the surfaces of the slinger 17 with pointing a shot blasting nozzle 22 to the slinger 17and rotating the rotary jig. One example of the shot blasting is carried out by moving the nozzle 22 within a predetermined range under conditions: beads diameter of 20∼100µm, blasting duration of about 90 seconds and blasting pressure of 1∼3 kg/cm2.

The steel sheet forming the slinger 17 usually having the surface roughness of a maximum height Rz 2.4 or less is roughened by shot blasting to a maximum height Rz 1∼9 in which the maximum height Rz is one of the roughness shape parameter of JIS (JIS B 0601-2001) and defined as a sum of a maximum value and a minimum value from an average line in values sampled from a reference line.

When innumerable dimples 21 are previously formed on the sliding surface of the slinger 17, the lubricating power is improved and thus sliding resistance of lips and the rotational torque is reduced. In addition, it is possible to increase grease holding power due to increase of surface area by dimples and thus to improve the sealability and durability of the seal for a long term due to suppression of wear of sealing lips and heat generation of lip sliding portions.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in Industries

The present invention can be applied to wheel bearing apparatus of the first through third generations of the inner ring rotation type.

### Explanation of Reference numerals and Characters

- 1: inner member
- 2: hub wheel
- 2a, 3a: inner raceway surface
- 2b: cylindrical portion
- 2c: serration
- 3: inner ring
- 4: wheel mounting flange
- 5: hub bolt
- 6: rolling element
- 7: cage
- 8: outer side seal
- 9: inner side seal
- 10: outer member
- 10a: outer raceway surface
- 10b: body mounting flange
- 10c: outer-side end face of outer member
- 10d: inner circumference of end of outer member
- 11: inner-side base portion of wheel mounting flange
- 12, 18: core metal
- 12a, 18a: fitting portion
- 12b, 18b: radial portion
- 13, 19: sealing member
- 13a, 19a: side lip
- 13b, 19c: dust lip
- 13c, 19b: grease lip
- 14: annular projection
- 15: sealing grease
- 16: sealing plate
- 17: slinger
- 17a: cylindrical portion
- 17b: standing portion
- 20: labyrinth seal
- 21: dimple
- 22: nozzle
- 51: sealing apparatus
- 52: inner member
- 53: slinger
- 53a: fitting portion
- 53b: standing portion
- 54: outer member
- 55: seal main body
- 56: core metal
- 57a: side lip
- 57b: main lip
- 57c: sub-lip
- 57: sealing member
- 58: lubricant
- A: inside of bearing
- B: outside of bearing
- α: inclined angle of annular projection
- δ: projected height of annular projection

## Claims

1. A wheel bearing apparatus for a vehicle comprising:
an outer member (10) formed on its inner circumference with double row outer raceway surfaces (10a, 10a);
an inner member (1) including a hub wheel (2) and at least one inner ring (3), the hub wheel (2) being integrally formed on its one end with a wheel mounting flange (4) and with a cylindrical portion (2b) axially extending from the wheel mounting flange (4), the inner ring (3) being press-fitted onto the cylindrical portion (2b) of the hub wheel (2), and double row inner raceway surfaces (2a, 3a) opposing respectively to the double row outer raceway surfaces (10a, 10a) and formed on the outer circumferences of the hub wheel (2) and the inner ring (3);
double row rolling elements (6, 6) freely rollably contained between the inner raceway surfaces (2a, 3a) of the inner member (1) and the outer raceway surfaces (10a, 10a) of the outer member (10); and
seals (8, 9) mounted within annular openings formed between the outer member (10) and the inner member (1) at least one seal (8 or 9) of the seals (8, 9) comprises a core metal (12 or 18) press-formed of steel sheet including a cylindrical fitting portion (12a or 18a) adapted to be press-fitted into the inner circumference of the end of the outer member (10) via a predetermined interference and a radial portion (12b or 18b) extending radially inward from the end of the fitting portion (12a or 18a), and further comprises a sealing member (13 or 19) of synthetic rubber formed with a plurality of sealing lips (13a, 13b, 13c or 19a, 19b, 19c) and integrally adhered to the fitting portion (12a or 18a) of the core metal (12 or 18) by vulcanizing adhesion;
bearing grease is contained within the bearing in a sealed manner and sealing grease is applied to the sliding portions of the sealing lips (13a, 13b, 13c or 19a, 19b, 19c);
**characterised in that** both the bearing grease and the sealing grease use same thickener and the worked penetration of 350 or less; and
that the kinematic viscosity of base oil of the sealing grease at 40°C is set to 70% or less of that of the bearing grease at 40°C.

2. A wheel bearing apparatus for a vehicle of claim 1 wherein the bearing grease comprises urea-base thickener and the kinematic viscosity of base oil of the bearing grease at 40°C is set to a range of 30∼170 mm2/s.

3. A wheel bearing apparatus for a vehicle of claim 1 or 2 wherein the pour point of base oil of the sealing grease is adjusted to a range of -65∼-12.5°C.

4. A wheel bearing apparatus for a vehicle of claim 3 wherein the pour point of base oil is adjusted by mixing mineral oil and synthetic oil.

5. A wheel bearing apparatus for a vehicle of claim 3 wherein the pour point of base oil is adjusted by adding pour point depressant to the base oil.

6. A wheel bearing apparatus for a vehicle of claim 1 or 3 wherein the saturated moisture of the sealing grease is set to a range of 30∼60% by weight.

7. A wheel bearing apparatus for a vehicle of claim 1 wherein mating surfaces of members (11,17) with which the sealing lips (13a, 13b, 13c; 19a, 19b, 19c) engage are roughened to a maximum height Rz 5∼20 (JIS B 0601-2001).

8. A wheel bearing apparatus for a vehicle of claim 1 wherein mating surfaces of members (11, 17) with which the sealing lips (13a, 13b, 13c; 19a, 19b, 19c) engage are formed with innumerable dimples (21) by shot blast treatment and roughened to a range of maximum height Rz 1∼9 (JIS B 0601-2001).

9. A wheel bearing apparatus for a vehicle of claim 1 wherein the sealing member (13) is adhered to the core metal (12) so that it covers the external surface of the core metal (12) from its radial portion (12b) to fitting portion (12a) and forms an annular projection (14) at the fitting portion, and wherein the annular projection (14) has an outer diameter gradually increasing toward the outer-side end (10c) of the outer member (10) so as to have a tapered outer surface of a predetermined inclined angle (α) and a predetermined projected height (δ) slightly larger than the outer diameter of the fitting portion (12a) of the core metal (12).

10. A wheel bearing apparatus for a vehicle of claim 1 wherein an inner-side tip end of the fitting portion (18a) of the core metal (18) is thinned, the inner-side being a side which is positioned inside of a vehicle body when the wheel bearing apparatus is mounted on the vehicle body, and wherein the sealing member (19) is adhered to the core metal (18) so that it covers the external surface of the core metal (18) from its radial portion (18b) to fitting portion (18a).

## Patentansprüche

1. Radlagervorrichtung für ein Fahrzeug, die Folgendes umfasst:
ein äußeres Element (10), auf dessen innerem Umfang eine Doppelreihe äußerer Laufbahnen (10a, 10a) ausgebildet ist;
ein inneres Element (1) einschließlich Radnabe (2) und mindestens einem inneren Ring (3), wobei an dem einen Ende der Radnabe (2) ein Radbefestigungsflansch (4) in einem Stück ausgebildet ist und sich ein zylindrischer Abschnitt (2b) axial vom Radbefestigungsflansch (4) aus erstreckt, der innere Ring (3) auf den zylindrischen Abschnitt (2b) der Radnabe (2) aufgepresst wird und die doppelreihigen inneren Laufbahnen (2a, 3a) entsprechend der Doppelreihe der äußeren Laufbahnen (10a, 10a) gegenüberliegen und auf dem äußeren Umfang der Radnabe (2) und dem inneren Ring (3) ausgebildet sind;
doppelreihige Wälzkörper (6, 6), die frei rollbar zwischen den inneren Laufbahnen (2a, 3a) des inneren Elements (1) und den äußeren Laufbahnen (10a, 10a) des äußeren Elements (10) enthalten sind; und
Dichtungen (8, 9), die innerhalb der ringförmigen Öffnungen montiert sind, die zwischen dem äußeren Element (10) und dem inneren Element (1) ausgebildet sind, wobei
mindestens eine Dichtung (8 oder 9) der Dichtungen (8, 9) ein Kernmetall (12 oder 18) umfasst, das aus Stahlblech gepresst wurde, einschließlich eines zylindrischen Einbauabschnitts (12a oder 18a), der so angepasst ist, dass er in den inneren Umfang des Endes des äußeren Elements (10) über einen vorgegebenen Eingriff gepresst wird, und einen radialen Abschnitt (12b oder 18b), der sich vom Ende des Einbauabschnitts (12a oder 18a) radial nach innen erstreckt, und des Weiteren ein Dichtelement (13 oder 19) aus synthetischem Kautschuk umfasst, das mit einer Vielzahl von Dichtlippen (13a, 13b, 13c oder 19a, 19b, 19c) ausgebildet ist und in einem Stück an den Einbauabschnitt (12a oder 18a) des Kernmetalls (12 oder 18) durch Vulkanisierung angehaftet wird;
Lagerfett abgedichtet innerhalb des Lagers enthalten ist und Dichtfett auf die Gleitabschnitte der Dichtlippen (13a, 13b, 13c oder 19a, 19b, 19c) aufgetragen wird;
dadurch charakterisiert,
dass sowohl das Lagerfett als auch das Dichtfett das gleiche Verdickungsmittel und Walkpenetration von maximal 350 verwenden; und
dass die kinematische Viskosität des Basisöls des Dichtfetts bei 40 °C auf maximal 70 % der des Lagerfetts bei 40 °C festgelegt ist.

2. Radlagervorrichtung für ein Fahrzeug nach Anspruch 1, wobei das Lagerfett Verdickungsmittel auf Harnstoffbasis umfasst und die kinematische Viskosität des Basisöls des Lagerfetts bei 40 °C in einem Bereich von 30 - 170 mm²/s festgelegt wird.

3. Radlagervorrichtung für ein Fahrzeug nach Anspruch 1 oder 2, wobei der Stockpunkt des Basisöls des Dichtfetts in einem Bereich von -65 ∼ -12,5 °C eingestellt ist.

4. Radlagervorrichtung für ein Fahrzeug nach Anspruch 3, wobei der Stockpunkt des Basisöls durch das Mischen von Mineralöl und synthetischem Öl eingestellt wird.

5. Radlagervorrichtung für ein Fahrzeug nach Anspruch 3, wobei der Stockpunkt des Basisöls durch Zugabe eines Stockpunkt-Dämpfungsmittels zum Basisöl eingestellt wird.

6. Radlagervorrichtung für ein Fahrzeug nach Anspruch 1 oder 3, wobei die gesättigte Feuchtigkeit des Dichtfetts in einem Bereich von 30 ∼ 60 Gewichts-% festgelegt wird.

7. Radlagervorrichtung für ein Fahrzeug nach Anspruch 1, wobei die Fügeflächen der Elemente (11, 17), in die die Dichtlippen (13a, 13b, 13c; 19a, 19b, 19c) eingreifen, bis zu einer maximalen Höhe Rz 5 ∼ 20 (JIS B 0601-2001) aufgeraut werden.

8. Radlagervorrichtung für ein Fahrzeug nach Anspruch 1, wobei die Fügeflächen der Elemente (11, 17), in die die Dichtlippen (13a, 13b, 13c; 19a, 19b, 19c) eingreifen, mit zahllosen Noppen (21) durch eine Kugelstrahlbehandlung ausgebildet sind und bis zu einer maximalen Höhe im Bereich von Rz 1 ∼ 9 (JIS B 0601-2001) aufgeraut werden.

9. Radlagervorrichtung für ein Fahrzeug nach Anspruch 1, wobei das Dichtelement (13) am Kernmetall (12) angehaftet wird, so dass es die äußere Oberfläche des Kernmetalls (12) von seinem radialen Abschnitt (12b) bis zum Einbauabschnitt (12a) abdeckt und einen ringförmigen Vorsprung (14) am Einbauabschnitt ausbildet,
und wobei der ringförmige Vorsprung (14) einen Außendurchmesser aufweist, der zum außenseitigen Ende (10c) des äußeren Elements (10) hin allmählich ansteigt, so dass eine konische Außenfläche mit einem vorgegebenen Neigungswinkel (α) und einer vorgegebenen vorstehenden Höhe (δ) entstehen, die etwas größer ist als der Außendurchmesser des Einbauabschnitts (12a) des Kernmetalls (12).

10. Radlagervorrichtung für ein Fahrzeug nach Anspruch 1, wobei ein innenseitiges spitzes Ende des Einbauabschnitts (18a) des Kernmetalls (18) verdünnt wird, die Innenseite eine Seite ist, die innerhalb einer Fahrzeugkarosserie positioniert ist, wenn die Radlagervorrichtung auf der Fahrzeugkarosserie montiert wird, und wobei das Dichtelement (19) am Kernmetall (18) angehaftet wird, so dass es die äußere Oberfläche des Kernmetalls (18) von seinem radialen Abschnitt (18b) bis zum Einbauabschnitt (18a) abdeckt.

## Revendications

1. Appareil de roulement de roue destiné à un véhicule, comprenant :
un organe extérieur (10) formé sur sa circonférence intérieure avec des surfaces de chemin de roulement extérieur à deux rangées (10a, 10a) ;
un organe intérieur (1) comportant un moyeu de roue (2) et au moins une bague intérieure (3), le moyeu de roue (2) étant formé d'une seule pièce sur son extrémité avec un flasque de montage de roue (4) et avec une partie cylindrique (2b) s'étendant axialement à partir du flasque de montage de roue (4), la bague intérieure (3) étant emmanchée à force dans la partie cylindrique (2b) du moyeu de roue (2), et des surfaces de chemin de roulement intérieur à deux rangées (2a, 3a) respectivement en regard des surfaces de chemin de roulement extérieur à deux rangées (10a, 10a) et formées sur les circonférences extérieures du moyeu de roue (2) et de la bague intérieure (3) ;
des éléments de roulement sur deux rangées (6, 6) contenus, de manière à pouvoir rouler librement, entre les surfaces de chemin de roulement intérieur (2a, 3a) de l'organe intérieur (1) et les surfaces de chemin de roulement extérieur (10a, 10a) de l'organe extérieur (10) ; et
des joints d'étanchéité (8, 9) montés à l'intérieur d'ouvertures annulaires formées entre l'organe extérieur (10) et l'organe intérieur (1),
au moins un joint d'étanchéité (8 ou 9) des joints d'étanchéité (8, 9) comprend un coeur métallique (12 ou 18) formé sous pression à l'aide d'une tôle d'acier, comportant une partie cylindrique à emmancher (12a ou 18a) conçue pour être emmanchée à force dans la circonférence intérieure de l'extrémité de l'organe extérieur (10) au moyen d'un serrage prédéterminé et une partie radiale (12b ou 18b) s'étendant radialement vers l'intérieur depuis l'extrémité de la partie à emmancher (12a ou 18a), et comprend en outre un organe d'étanchéité (13 ou 19) en caoutchouc synthétique, formé avec une pluralité de lèvres d'étanchéité (13a, 13b, 13c ou 19a, 19b, 19c) et adhérant à la partie à emmancher (12a ou 18a) du coeur métallique (12 ou 18) en faisant corps avec celle-ci, au moyen d'une adhésion par vulcanisation ;
de la graisse de roulement est contenue dans le roulement de manière étanche et de la graisse d'étanchéité est appliquée sur les parties de glissement des lèvres d'étanchéité (13a, 13b, 13c ou 19a, 19b, 19c);
**caractérisé en ce que** :
la graisse de roulement et la graisse d'étanchéité utilisent toutes deux le même épaississant et présentent une pénétrabilité après malaxage inférieure ou égale à 350 ; et
la viscosité cinématique de l'huile de base de la graisse d'étanchéité à 40 °C est définie à 70 % au plus de celle de la graisse de roulement à 40 °C.

2. Appareil de roulement de roue destiné à un véhicule, selon la revendication 1, dans lequel la graisse de roulement comprend un épaississant à base d'urée et la viscosité cinématique de l'huile de base de la graisse de roulement à 40 °C est définie dans une plage de 30 à 170 mm²/s.

3. Appareil de roulement de roue destiné à un véhicule, selon la revendication 1 ou 2, dans lequel le point d'écoulement de l'huile de base de la graisse d'étanchéité est réglé dans une plage de -65 à -12,5 °C.

4. Appareil de roulement de roue destiné à un véhicule, selon la revendication 3, dans lequel le point d'écoulement de l'huile de base est réglé par mélange d'huile minérale et d'huile synthétique.

5. Appareil de roulement de roue destiné à un véhicule, selon la revendication 3, dans lequel le point d'écoulement de l'huile de base est réglé par ajout d'un améliorant de point d'écoulement à l'huile de base.

6. Appareil de roulement de roue destiné à un véhicule, selon la revendication 1 ou 3, dans lequel l'humidité à saturation de la graisse d'étanchéité est définie dans une plage de 30 à 60 % en poids.

7. Appareil de roulement de roue destiné à un véhicule, selon la revendication 1, dans lequel les surfaces de contact des organes (11, 17) avec lesquels les lèvres d'étanchéité (13a, 13b, 13c ; 19a, 19b, 19c) entrent en contact sont rendues rugueuses jusqu'une hauteur maximale Rz de 5 à 20 (JIS B 0601-2001).

8. Appareil de roulement de roue destiné à un véhicule, selon la revendication 1, dans lequel les surfaces de contact des organes (11, 17) avec lesquels les lèvres d'étanchéité (13a, 13b, 13c; 19a, 19b, 19c) entrent en contact sont formées avec d'innombrables dépressions (21) par traitement de grenaillage et rendues rugueuses selon une plage de hauteur maximum Rz de 1 à 9 (JIS B 0601-2001).

9. Appareil de roulement de roue destiné à un véhicule, selon la revendication 1, dans lequel l'organe d'étanchéité (13) adhère au coeur métallique (12) de manière à recouvrir la surface externe du coeur métallique (12), de sa partie radiale (12b) à la partie à emmancher (12a), et à former une saillie annulaire (14) au niveau de la partie à emmancher,
et dans lequel la saillie annulaire (14) présente un diamètre extérieur croissant progressivement vers l'extrémité côté extérieur (10c) de l'organe extérieur (10), de manière à présenter une surface extérieure conique ayant un angle d'inclinaison prédéterminé (α) et une hauteur saillante prédéterminée (δ) légèrement supérieure au diamètre extérieur de la partie à emmancher (12a) du coeur métallique (12).

10. Appareil de roulement de roue destiné à un véhicule, selon la revendication 1, dans lequel un bout d'extrémité côté intérieur de la partie à emmancher (18a) du coeur métallique (18) est aminci, le côté intérieur étant un côté qui est positionné à l'intérieur d'une carrosserie de véhicule, lorsque l'appareil de roulement de roue est monté sur la carrosserie de véhicule, et dans lequel l'organe d'étanchéité (19) adhère au coeur métallique (18) de manière à recouvrir la surface externe du coeur métallique (18), de sa partie radiale (18b) à la partie à emmancher (18a).
